# EUROPÄISCHE PATENTSCHRIFT

(11) **EP 2 941 376 B1**
(45) Veröffentlichungstag und Bekanntmachung des Hinweises auf die Patenterteilung: **15.11.2017**
(21) Anmeldenummer: 14705119.7
(22) Anmeldetag: 14.02.2014
(51) Int. Cl.: B61L 15/00, G06F 13/42, B61L 3/12, B61L 3/22, B61L 27/00

(54) **SCHIENENFAHRZEUG MIT MINDESTENS EINEM ZUGSICHERUNGSGERÄT NACH EINEM NATIONALEN STANDARD UND MIT EINER ETCS-FAHRZEUGEINRICHTUNG SOWIE VERFAHREN ZUM BETREIBEN DES SCHIENENFAHRZEUGS**
RAIL VEHICLE HAVING AT LEAST ONE TRAIN PROTECTION DEVICE ACCORDING TO A NATIONAL STANDARD AND HAVING AN ETCS VEHICLE APPARATUS AND METHOD FOR OPERATING THE RAIL VEHICLE
VÉHICULE FERROVIAIRE POURVU D'AU MOINS UN APPAREIL DE SÉCURITÉ FERROVIAIRE CONFORME À UNE NORME NATIONALE ET D'UN DISPOSITIF EMBARQUÉ ETCS, ET PROCÉDÉ DE FONCTIONEMENT DU VÉHICULE FERROVIAIRE

(30) Priorität: 26.02.2013 DE 102013203152
(43) Veröffentlichungstag der Anmeldung: 11.11.2015
(73) Patentinhaber: Siemens Aktiengesellschaft, 80333 München (DE)
(72) Erfinder: SIMON, Frank, 38162 Cremlingen (DE)
(86) Internationale Anmeldenummer: PCT/EP2014/052898
(87) Internationale Veröffentlichungsnummer: WO 2014/131629

(56) Entgegenhaltungen:
- WO-A2-03/037694
- DE-A1-102009 025 550
- DE-A1-102011 004 840
- US-A1- 2006 138 285
- WERNER GEIER: "Das neue Mensch-Maschine Interface der Lokomotive BR 185", EISENBAHN-REVUE INTERNATIONAL, VERLAG MINIREX, LUZERN, CH, Bd. 1999, Nr. 9, 1. Januar 1999 (1999-01-01), Seiten 366-374, XP009091943, ISSN: 1421-2811

## Beschreibung

Schienenfahrzeug mit mindestens einem Zugsicherungsgerät nach einem nationalen Standard und mit einer ETCS-Fahrzeugeinrichtung sowie Verfahren zum Betreiben des Schienenfahrzeugs Es ist bekannt, dass Schienenfahrzeuge in der Vergangenheit nahezu ausschließlich mit Zugsicherungsgeräten ausgerüstet wurden, die jeweils einem nationalen Standard entsprechen. In Europa sind dies beispielsweise die Linienzugbeeinflussung LZB und die verschiedenen Versionen der Zugbeeinflussung PZB/Indusi. Ferner ist es bekannt, dass seit einigen Jahren ein so genanntes European Train Control System (ETCS) entwickelt und inzwischen teilweise eingeführt worden ist, das eine ETCS-Fahrzeugeinrichtung aufweist. Diese Einrichtung enthält unter anderem einen ETCS-Rechner EVC (European Vital Computer)und eine Führerstandsanzeige DMI (Driver Machine Interface).

Die Erfindung betrifft ein Schienenfahrzeug mit mindestens einem Zugsicherungsgerät nach einem nationalen Standard und mit einer ETCS-Fahrzeugeinrichtung mit einer Führerstandsanzeige mit einer Schnittstelle zur Eingabe betrieblicher Daten über die Schnittstelle für das mindestens eine Zugsicherungsgerät.

Um ein solches Schienenfahrzeug wartungsfreundlich auszugestalten ist es gemäß Anspruch 1 ausgebildet. Es ist zwar aus dem Aufsatz von Werner Geier "Das neue Mensch-Maschine-Interface der Lokomotive BR 185" in der Zeit schrift "Eisenbahn-Revue International", Verlag MINIREX, Luzern, CH, Bd. 199, Nr. 9, 1. Januar 1999, Seiten 366-374, XP009091943, ISBN: 1421-2811 ein Mensch-Maschine-Interface FFB-MM bekannt, über den verschiedene Zugsicherungssysteme auszuwählen und zu steuern sind, jedoch wird dort die Eingabe von Wartungsdaten nicht ermöglicht. Ferner ist es aus der veröffentlichten US-Patentanmeldung US 2006/0138285 A1 bekannt, bei einem Schienenfahrzeug mit einer Anzeigevorrichtung unterschiedliche Zugriffsrechte für die Zugführer, dass Wartungspersonal und sonstiges Personal vorzusehen.

Bekannt ist es auch aus der internationalen Patentanmeldung WO2003/037694 A2, Mechaniker und Elektriker als Wartungspersonal unterschiedliche Zugriffsrechte als für das Zugführerpersonal vorzusehen, indem das Wartungspersonal nur nach beispielsweise Eingabe eines Codes Fehlfunktionen eines Lokomotiven-Verbunds beurteilen kann.

Ein wesentlicher Vorteil des erfindungsgemäßen Schienenfahrzeugs besteht darin, dass bei ihm Daten-Einstellungen an dem Zugsicherungsgerät in einfacher Weise durch Instandhaltungsbeauftragte vorgenommen werden können, nachdem diese den Identifikationscode korrekt eingegeben haben; anschließend können
dann Einstellungsdaten auf der Führerstandsanzeige eingegeben werden. Ein Wartungs-Computer für das Zugsicherungsgerät oder eine besondere Mensch-Maschine-Schnittstelle am Zugsicherungsgerät sind nicht erforderlich.

Die Erfindung betrifft ferner ein Verfahren zum Betreiben eines Schienenfahrzeugs mit mindestens einem Zugsicherungsgerät nach einem nationalen Standard und einer ETCS-Fahrzeugeinrichtung mit einer Führerstandsanzeige mit einer Schnittstelle zur Eingabe betrieblicher Daten für das mindestens eine Zugsicherungsgerät.

Um bei diesem Verfahren Wartungsmaßnahmen in einfacher Weise durchführen zu können, wird erfindungsgemäß im Rahmen der Eingabe der betrieblichen Daten eine Abfrage eines Identifikationscodes auf der Führerstandsanzeige generiert, bei korrekter Beantwortung der Abfrage eine Datenabfrage mit wartungstechnischen Daten auf der Führerstandsanzeige erzeugt und die Eingabe von Einstellungsdaten auf der Führerstandsanzeige ermöglicht.

Bei dem erfindungsgemäßen Verfahren ergeben sich sinngemäß die gleichen Vorteile, wie sie oben in Bezug auf das erfindungsgemäße Schienenfahrzeug genannt sind.

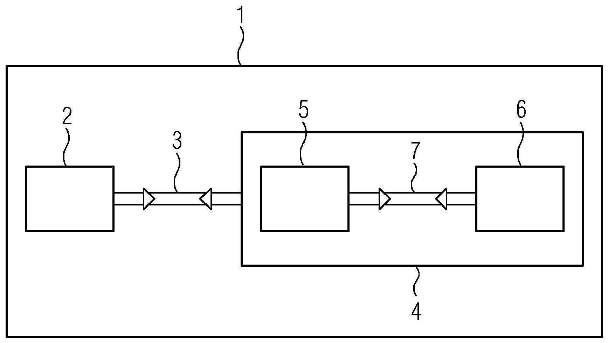

Zur weiteren Erläuterung der Erfindung ist in der Figur ein Ausführungsbeispiel eines erfindungsgemäßen Schienenfahrzeugs mit den im Zusammenhang mit der Erfindung interessierenden Komponenten dargestellt.

Das nur schematisch gezeigte Schienenfahrzeug 1 enthält ein Zugsicherungsgerät 2 nach einem nationalen Standard, das beispielsweise ein LZB-Zugsicherungsgerät sein kann. Kommunikativ über eine Schnittstelle 3 ist mit dem Zugsicherungsgerät 2 eine ETCS-Fahrzeugeinrichtung 4 verbunden, die unter anderem einen ETCS-Rechner 5 und eine Führerstandsanzeige 6 enthält; der ETCS-Rechner 5 und die Führerstandsanzeige 6 sind über einen internen Datenbus 7 miteinander verbunden.

Die Schnittstelle 3 stellt eine in /UNISIG Subset 026/ und /UNISIG 035/ definierte Schnittstelle dar und ist bei einem Bestandsfahrzeug bei einer ergänzenden Ausrüstung mit einer ETCS-Fahrzeugeinrichtung eingerichtet, um in das Zugsicherungsgerät 2 vom Zugführer her betriebliche Daten eingeben zu können. UNISIG bezeichnet dabei die Arbeitsgruppe "Union Industry of Signalling" des Verbandes der europäischen Eisenbahn-Industrie.

Bei Wartungsarbeiten wird die Führerstandsanzeige 6 dazu benutzt, um über die Schnittstelle 3 vom Wartungsbeauftragten Wartungsdaten einzugeben. Dazu wird im Rahmen der Eingabe betrieblicher Daten zunächst eine Abfrage nach einem Identifikationscode erzeugt und diese Anfrage auf der Führerstandsanzeige 6 angezeigt. Ist vom Wartungsbeauftragten der korrekte Identifikationscode eingegeben, dann wird auf der Führerstandsanzeige 6 eine Datenabfrage mit wartungstechnischen Daten erzeugt. Auf der Führerstandsanzeige 6 wird also ein Eingabemenü für Wartungsdaten aufgeblendet, das die wartungstechnischen Daten beim Wartungsbeauftragten abfragt. So können auf einfache Weise eine Wartung des Zugsicherungsgerätes bzw. Einstellungsänderungen an dem Zugsicherungsgerät vorgenommen werden.

## Patentansprüche

1. Schienenfahrzeug (1) mit mindestens einem Zugsicherungsgerät (2) nach einem nationalen Standard und einer ETCS-Fahrzeugeinrichtung (4) mit einer Führerstandsanzeige (6) mit einer Schnittstelle (3) zur Eingabe betrieblicher Daten über die Schnittstelle (3) für das mindestens eine Zugsicherungsgerät (2),
**dadurch gekennzeichnet, dass**
das Zugsicherungsgerät (2) so ausgebildet ist, dass es im Rahmen der Eingabe der betrieblichen Daten eine Abfrage eines Identifikationscodes eines Instandhaltungsbeauftragtens generiert und auf der Führerstandsanzeige (6) anzeigt, bei korrekter Beantwortung der Abfrage eine Datenabfrage mit wartungstechnischen Daten auf der Führerstandsanzeige (6) erzeugt und die Eingabe von Einstellungsdaten des Zugsicherungsgeräts auf der Führerstandsanzeige (6) ermöglicht.

2. Verfahren zum Betreiben eines Schienenfahrzeugs (1) mit mindestens einem Zugsicherungsgerät (2) nach einem nationalen Standard und einer ETCS-Fahrzeugeinrichtung (4) mit einer Führerstandsanzeige (6) mit einer Schnittstelle (3) zur Eingabe betrieblicher Daten für das mindestens eine Zugsicherungsgerät (2),
**dadurch gekennzeichnet, dass**
• im Rahmen der Eingabe der betrieblichen Daten eine Abfrage eines Identifikationscodes eines Instandhaltungsbeauftragtens auf der Führerstandsanzeige (6) generiert wird,
• bei korrekter Beantwortung der Abfrage eine Datenabfrage mit wartungstechnischen Daten auf der Führerstandsanzeige (6) erzeugt und die Eingabe von Einstellungsdaten des Zugsicherungsgeräts auf der Führerstandsanzeige (6) ermöglicht wird.

## Claims

1. Rail vehicle (1) having at least one train protection device (2) according to a national standard and an ETCS vehicle apparatus (4) with a cab display (6) with an interface (3) for the input of operational data via the interface (3) for the at least one train protection device (2), **char**
**acterised in** that
the train protection device (2) is embodied such that it generates a request for an identification code of a maintenance worker and displays it on the cab display (6) during the input of the operational data and, if the request is responded to correctly, a data request with maintenance data is produced on the cab display (6) and enables the input of settings data of the train protection device on the cab display (6).

2. Method for operating a rail vehicle (1) having at least one train protection device (2) according to a national standard and an ETCS vehicle apparatus (4) with a cab display (6) with an interface (3) for the input of operational data for the at least one train protection device (2),
**characterised in that**
• during the input of the operational data a request for an identification code of a maintenance worker is generated at the cab display (6),
• if the request is responded to correctly, a data request with maintenance data is produced on the cab display (6) and the input of settings data of the train protection device on the cab display (6) is enabled.

## Revendications

1. Véhicule (1) ferroviaire comprenant au moins un appareil (2) d'arrêt des trains, suivant une norme nationale, et un dispositif (4) de véhicule ETCS à affichage (6) en cabine, ayant une interface (3) d'entrée de données de service par l'interface (3) pour le au moins un appareil (2) d'arrêt des trains,
**caractérisé en ce que**
l'appareil (2) d'arrêt des trains est constitué de manière à créer, dans le cadre de l'entrée des données de service, une demande d'un code d'identification d'un chargé d'entretien et à l'afficher sur l'affichage (6) en cabine, à produire, si la réponse à la demande est correcte, une demande de données avec des données de technique d'entretien sur l'affichage (6) en cabine et
à rendre possible l'entrée de données de réglage de l'appareil d'arrêt des trains sur l'affichage (6) en cabine.

2. Procédé pour faire fonctionner un véhicule (1) ferroviaire, comprenant au moins un appareil (2) d'arrêt des trains, suivant une norme nationale, et un dispositif (4) de véhicule ETCS comprenant un affichage (6) en cabine ayant un interface (3) d'entrée de données de service pour le au moins un appareil (2) d'arrêt des trains,
**caractérisé en ce que**
• dans le cadre de l'entrée des données de service, une demande d'un code d'identification d'un chargé d'entretien est créée sur l'affichage (6) en cabine,
• en cas de réponse correcte à la demande, il est produit une demande de données avec des données de technique d'entretien sur l'affichage (6) en cabine et l'entrée de données de réglage de l'appareil d'arrêt des trains est rendue possible sur l'affichage (6) en cabine.
